# EUROPÄISCHE PATENTSCHRIFT

(11) **EP 0 736 725 B1**
(45) Veröffentlichungstag und Bekanntmachung des Hinweises auf die Patenterteilung: **01.09.1999**
(21) Anmeldenummer: 95117375.6
(22) Anmeldetag: 04.11.1995
(51) Int. Cl.: F21M 1/00

(54) **Verfahren zur Übertragung von Videosignalen und Bildübertragungssystem für Operationsleuchte**
Process for transmitting videosignals and image transmission system in an operating lamp
Procédé de transmission de signals vidéo et système de transmission des images pour appareil d'éclairage chirurgical

(30) Priorität: 30.06.1995 DE 19523377; 07.04.1995 DE 19512692
(43) Veröffentlichungstag der Anmeldung: 09.10.1996
(73) Patentinhaber: Heraeus Med GmbH, D-63450 Hanau (DE)
(72) Erfinder: Steckhan, Markus, D-61440 Oberursel (DE)
(74) Vertreter: Kühn, Hans-Christian

(56) Entgegenhaltungen:
- EP-A- 0 421 130
- DE-U- 8 814 303
- DE-U- 9 217 573
- DE-U- 9 306 771

## Beschreibung

Die Erfindung betrifft ein Verfahren zur Übertragung von Videosignalen, die mittels einer Video-kamera in Verbindung mit einer Operationsleuchte aufgenommen und über wenigstens eine im Inneren der Operationsleuchten-Aufhängung liegende elektrische Leitungen übermittelt werden, sowie ein Bildübertragungssystem für eine Operationsleuchte mit Videokamera.

Aus dem deutschen Gebrauchsmuster 89 13 757 ist ein Bildübertragungssystem in Operationsleuchten bekannt, bei dem die Video- und Einstellsignale für eine in der Operationsleuchte angeordnete Kamera über im Inneren der Operationsleuchten-Aufhängung untergebrachte Kabelleitungen, sowie über Schleifringe im Gelenkbereich von Bügeln, Auslegern und Armen der Operationsleuchte übertragen werden; die einzelnen Schleifringe können pro Gelenk 6 bis 12 Pole aufweisen, wobei sie gekapselt sind.

Als problematisch erweist sich die verhältnismäßig aufwendige Verkabelung mit einer Vielzahl von Einzeldrähten sowie Schleifringen innerhalb der Gelenke sowie die Schwierigkeit einer nachträglichen Ausstattung von Operationsleuchten mit Videokamera und Bildübertragungssystem.

Die Erfindung stellt sich die Aufgabe, eine Übertragung von Video- und Steuersignalen bei einer Minimierung von Leitungen und Schleifringen, bzw. Kupplungselementen für Einzelkabel vorzunehmen. Weiterhin soll eine Nachrüstung üblicher Operationsleuchten mit einem Bildübertragungssystem auf einfache Weise ermöglicht werden.

Die Aufgabe wird verfahrensgemäß durch die kennzeichnenden Merkmale des Anspruchs 1 gelöst.

Als vorteilhaft erweist es sich, daß durch Leitungsanpassung der Treiber zur Einkopplung, bzw. Auskopplung einer Verwendung der herkömmlichen Verkabelung der Stromversorgung für Operationsleuchten einschließlich der Verbindungselemente möglich ist, ohne daß es zu einer erkennbaren Verschlechterung der für die Bildqualität maßgebenden Videosignale kommt.

Weitere vorteilhafte Ausgestaltungen des Verfahrens sind in den Ansprüchen 2 und 3 angegeben.

Weiterhin erweist es sich als vorteilhaft, daß die ohnehin für einen Leitungsstrom von 17 bis 20 Ampere ausgelegten herkömmlichen Verkabelungen bereits fertiggestellter Operationsleuchten ohne größere Probleme mit den Video- bzw. Steuersignalen für eine Videokamera beaufschlagt werden können, ohne daß es hier zu gegenseitigen Störungen von Lampenbetrieb und Kamerabetrieb kommt.

Die Aufgabe wird vorrichtungsgemäß durch die kennzeichnenden Merkmale des Anspruchs 4 gelöst.

Weiterhin ist es vorteilhafterweise möglich, ein einziges Koaxialkabel sowohl zur Stromversorgung von Strahlerlampen als auch zur Versorgung der Videokamera zusammen mit Übertragung der Video- und Steuerimpulse vorzusehen; die Kamera kann dabei in das Gehäuse der Operationsleuchte voll integriert sein, es ist jedoch auch möglich, eine aufsteckbare Kamera vorzusehen, wie es beispielsweise bei der Nachrüstung bereits bestehender Operationsleuchten vorteilhafterweise möglich ist.

Weitere vorteilhafte Ausgestaltungen der Anordnung sind in den Ansprüchen 5 bis 11 angegeben.

Ein wesentlicher Vorteil bei der Nachrüstung ist darin zu sehen, daß es möglich ist, sowohl die Steuersignale als auch die Videosignale über die Leitung mit ihren Verbindungselementen in den Gelenkbereichen, die zur üblichen Leuchtenstromversorgung dient zu verwenden. Auch wenn eine Leitung herkömmlicher Art keine optimalen Übertragungseigenschaften für Video- und Steuersignale aufweist, ist es doch möglich, eine Übertragung dieser Signale ohne merkliche Einbussen und ohne aufwendige Regenerationstechnik zu erzielen.

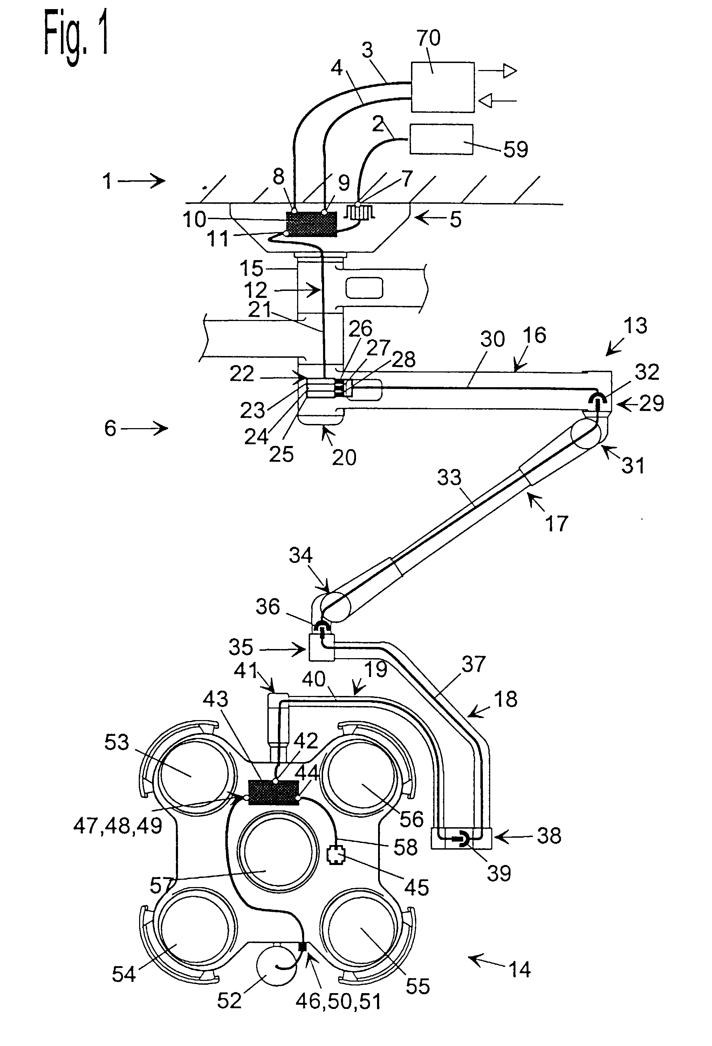

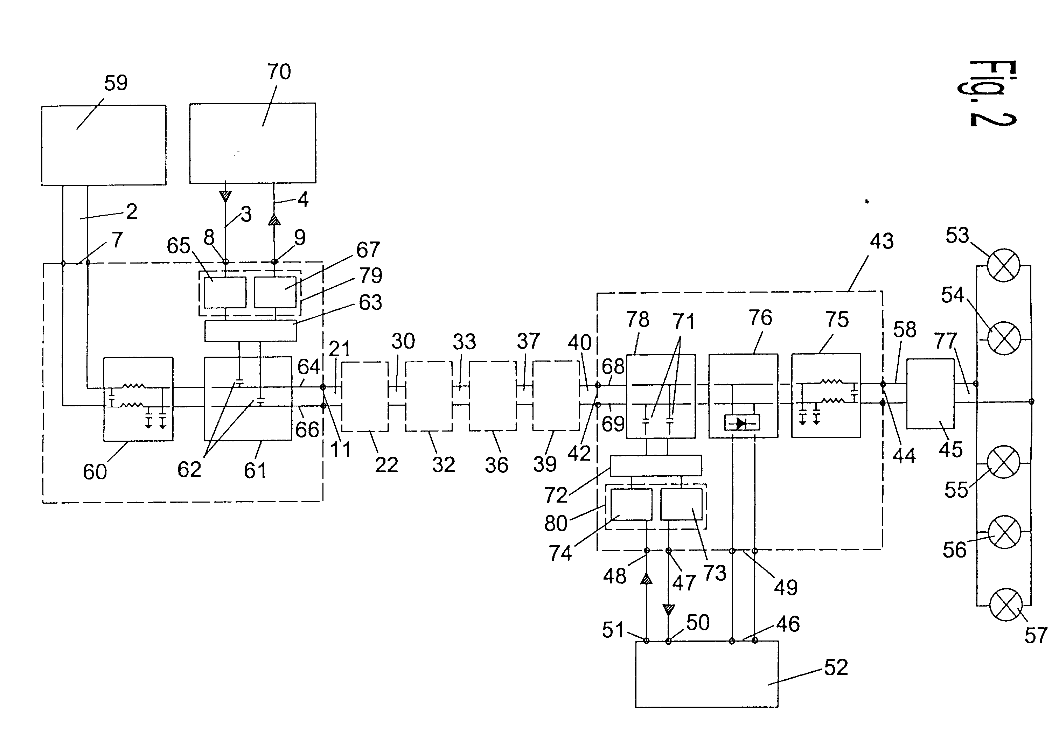

Im folgenden ist der Gegenstand der Erfindung anhand der Figuren 1 und 2 näher erläutert.
Figur 1 zeigt schematisch im Längsschnitt eine an einer Deckenbefestigung eines Operationsraumes montierte Operationsleuchte mit Videoübertragung;
Figur 2 zeigt schematisch ein Blockschaltbild des leitungsgebundenen TV-Übertragungssystems der Operationsleuchte zusammen mit der zugehörigen Stromversorgung.

Figur 1 zeigt schematisch den Deckenbereich 1 des Operationsraumes zusammen mit den dort geführten Leitungen für die Stromversorgung 2, für Steuersignalübertragung der Videokamera 3 sowie für Videosignale 4. Die Leitungen 2, 3 und 4 sind im Bereich einer Deckenbefestigung bzw. Aufhängekonsole 5 der Operationsleuchte 6 mit Anschlüssen 7, 8 und 9 eines ersten Koppel-Moduls 10 verbunden, der seinerseits mit einem Anschluß 11 zur Verbindung mit einer als symmetrische Doppelleitung ausgebildeten Leitung 12 im Inneren der Aufhängung 13 der Operationsleuchte 6 verbunden ist. Das eigentliche Leuchtengehäuse 14 ist über Flanschrohr 15, Ausleger 16, Federarm 17 sowie Bügel 18 und Leuchtenbügel 19 gehalten.

Der erste Teil 21 der Leitung 12 erstreckt sich vom Anschluß 11 des ersten Koppel-Moduls 10 ausgehend durch das Flanschrohr 15 bis zum ersten Horizontal-Drehgelenk 20 mit Kontaktelement 22, das mittels der Schleifringe 23, 24, 25, welche in dem Flanschrohr 15 stationär befestigt sind, und der den Schleifringen zugeordneter bewegbarer Schleifkontakte 26, 27, 28 Energie und Signale zwischen dem ersten und dem zweiten Teil 30 der Leitung 12 überträgt; die Dreifach-Schleifring-Anordnung dient aufgrund der Übertragung eines Schutzpotentials der erhöhten Sicherheit bei der um 360° bzw. über 360° hinaus möglichen Drehung des Ausleger 16. Der im Ausleger 16 befindliche zweite Teil 30 der Leitung 12 ist über ein zweites Kontaktelement 32 in Horizontal-Drehgelenk 29 mit dem dritten Teil 33 der Leitung 12 innerhalb des Federarmes 17 verbunden; der Federarm 17 ist mittels Drehgelenk 29 um 360° in einer horizontalen Ebene drehbar und mittels erstem Kippgelenk 31 um 86° +/-43° entlang einer vertikalen Ebene schwenkbar angeordnet. An seinem Ende ist Federarm 17 über ein zweites Kippgelenk 34 mit einem dritten Kontaktelement 36 in Drehgelenk 35 versehen, welches den dritten Teil 33 der Leitung mit dem im Bügel 18 eingebrachten vierten Teil 37 der Leitung 12 elektrisch verbindet. Bügel 18 ist mittels Drehgelenk 35 mit dem dritten Kontaktelement 36 um eine horizontale Achse schwenkbar. An seinem äußeren Ende ist Bügel 18 mit einem weiteren Drehgelenk 38 mit einem vierten Kontaktelement 39 versehen, welches den vierten Teil 37 der Leitung mit dem fünften Teil 40 der Leitung 12 verbindet. Das vierte Kontaktelement 39 ist um eine horizontale Achse drehbar angeordnet. Leuchtenbügel 19 weist ein Drehgelenk 41 an seinem Ende auf, an dem das Leuchtengehäuse 14 der Operationsleuchte schwenkbar befestigt ist. Leitung 12 ist an ihrem Ende über Anschluß 42 mit dem zweiten Koppel-Modul 43 innerhalb des Leuchtengehäuses 14 verbunden, wobei der Koppel-Modul über Anschluß 44 und Leitung 58 mit einem Klemmstein 45 zum Anschluß der Stromversorgung der einzelnen Leuchten verbunden ist. Weiterhin ist der zweite Koppel-Modul 43 über Anschluß 49 mit dem Stromversorgungseingang 46, Anschluß 47 des Koppel-Moduls mit dem Eingang für Steuersignale 50 sowie Anschluß 48 mit dem Ausgang für Video-Signale 51 der Videokamera 52 verbunden; die Kamera 52 ist im Ausführungsbeispiel seitlich am Leuchtengehäuse 14 der Operationsleuchte so befestigt, daß sie auf das Beleuchtungsfeld, bzw. Operationsfeld ausgerichtet ist. Die Lampen bzw. Strahler der Operationsleuchte sind mit den Ziffern 53, 54, 55, 56 und 57 bezeichnet.

Als Leitung 12 dient in der Praxis ein übliches Stromversorgungskabel als Doppeladerleitung für Operationsleuchten, wobei die Kontaktelemente zur zusätzlichen Übertragung eines Schutzleiterpotentials jeweils dreipolig ausgeführt sind und jeweils drei Schleifringe, bzw. drei Schleifkontakte an jedem Anschluß des Kontaktelements vorgesehen sind. Es ist jedoch auch möglich, zur Stromversorgung und Steuersignal- bzw. Videosignal-Übertragung ein Koaxialkabel einzusetzen, dessen Teile jeweils über Kontaktelemente miteinander so verbunden sind, daß eine von Fremdeinflüssen ungestörte Signal-Übertragung von Videosignalen und Steuersignalen möglich ist.

Das mit den Bezugsziffern 59 bezeichnete Stromversorgungssystem und mit Bezugsziffer 70 bezeichnete Videoeinrichtung sind in Zusammenhang mit Figur 2 nachstehend erläutert.

Das Blockschaltbild gemäß Figur 2 zeigt schematisch den schaltungstechnischen Zusammenhang sowie den inneren Aufbau der Koppel-Module und die angeschlossene Peripherie.

Gemäß Figur 2 ist die mit Anschluß 7 des ersten Koppel-Moduls 10 verbundene Stromversorgungsleitung 2 mit Stromversorgung 59 verbunden, welche einen am stationären Wechselspannungsnetz angeschlossenen Netztransformator aufweist, dessen Sekundärseite Stromversorgungs-Leitung 2 mit einem Niederspannungswechselstrom von beispielsweise 24 Volt und 50 Hertz speist; weiterhin weist Stromversorgung 59 ein hier nicht dargestelltes Notstromaggregat auf, das durch ein netzbetriebenes Ladegerät versorgte wiederaufladbare Batterien aufweist, die bei Netzausfall Stromversorgungsleitung 2 mit einer Gleichspannung von ca. 24 Volt versorgen. Anschluß 7 ist im Inneren des ersten Koppel-Moduls 10 mit einem Netzfilter 60 verbunden, welches störende Spannungsspitzen oder Oberwellen unterdrückt und somit eine störungsfreie Übertragung von Video- und Steuersignalen ermöglichen soll. Netzfilter 60 ist über Leitungen 64, 66 in einem Signal-Ein-Auskopplungsglied 61 mit dem zur Leitung 12 führenden Anschluß 11 galvanisch verbunden.

Das Signal-Ein-Auskopplungsglied 61 weist Koppel-Kondensatoren 62 auf, welche eine Verbindung zwischen der zur Stromversorgung vorgesehenen Leitung 64, 66 und einem Modulationsteil 79 mit Modulator 65 und Demodulator 67 herstellen, wobei zwischen Modulationsteil 79 und Signal-Ein-Auskopplungsglied 61 ein Anpassungsglied 63 geschaltet ist, um Fehlanpassungen zu vermeiden; somit ist es möglich, am Anschluß 8 des Koppelmoduls 10 anliegende Steuersignale sowie ggf. Synchronsignale für die Video-Kamera mittels Modulator 65 auf Leitung 64, 66 aufzumodulieren, während über Leitung 64, 66 und Demodulator 67 von der Video-Kamera abgegebene Videosignale am Anschluß 9 des Koppelmoduls 10 zur bildlichen Weiterverarbeitung in einer Video-Einrichtung 70 abgegeben werden. Die Leitungen 64, 66 bilden die beiden Stromzuleiter der über Anschluß 11 angeschlossenen Leitung 12. In der Praxis ist es möglich, diese Leitung 12 als symmetrische Doppeladerleitung auszubilden, es ist jedoch auch möglich, ein Koaxialkabel einzusetzen; aufgrund von Sicherheitsvorschriften ist zusätzlich ein dritter Schutzleiter vorgesehen, der mit Gehäuse und Aufhängung der Operationsleuchte elektrisch verbunden ist; dieser Schutzleiter wird zwecks besserer Anschaulichkeit nicht näher erläutert.

Im folgenden wird zwecks besserer Übersicht die Leitung 12 als symmetrische Doppeladerleitung dargestellt, deren Teile 21, 30, 33, 37 und 40 jeweils über Kontaktelemente 22, 32, 36 und 39 miteinander verbunden sind, wobei der erste Teil 21 mit Anschluß 11 und der letzte Teil 40 der Leitung 12 mit Anschluß 42 am zweiten Koppel-Modul 43 im Leuchtengehäuse 14 verbunden ist.

Die beiden Anschlußkontakte von Anschluß 42 des zweiten Koppel-Moduls 43 sind jeweils mit einer Leitung 68, 69 verbunden, von denen Leitung 68, 69 über Koppel-Kondensatoren 71 als Signal-Ein-Auskoplungsglied und Anpassungsglied 72 an einen Demodulator 73 im Modulationsteil 80 zur Demodulation der für die Videokamera 52 vorgesehenen Steuersignale 50 angeschlossen ist, und über Anpassungsglied 72 und Koppelkondensatoren 71 von Modulator 74 die von Video-Kamera 52 erzeugten Videosignale auf Leitung 68, 69 aufmoduliert und über Leitung 12 übertragen werden. Weiterhin sind die Leitungen 68, 69 mit einem Stromversorgungsgerät 76 für den Stromversorgungeingang 46 der Videokamera 52 verbunden, welches die bei stationärer Netzversorgung anliegende Wechselspannung in Gleichspannung umwandelt, bzw. bei Netzausfall anliegende Gleichspannung an die Versorgungsspannung der Kamera anpaßt; darüberhinaus ist ein Netzfilter 75 vorgesehen, über das die Stromversorgung der an Klemmstein 45 angeschlossenen Strahlerlampen 53, 54 ,55, 56 und 57 erfolgt.

Im üblichen stationären Betrieb werden somit die fünf Strahlermodule 53, 54 , 55, 56 und 57 aus der Stromversorgung 59 über Leitung 2, dem ersten Koppel-Modul 10, Ausgang 11 und Leitung 12 mit den dazwischen liegenden Kontaktelementen sowie Koppel-Modul 43, Leitung 58 zum Klemmstein 45 und Lampenleitungen 77 versorgt; gleichzeitig werden über die Video-Einrichtung 70 Kamerasteuersignale (Stellsignale und Synchronisiersignale) über Eingang 8 an den Modulator 65 des ersten Modulationsteils 79 im ersten Koppel-Modul 10 abgegeben, und über Anpassungsglied 63 und Koppelkondensatoren 62 auf Leitung 64, 66 bzw. auf Leitung 12 mit ihren zwischengeschalteten Kontaktelementen aufmoduliert, bis diese über Eingang 42 und Leitung 68, 69 und den Koppelkondensatoren 71 sowie Anpassungsglied 72 des zweiten Koppel-Moduls 43 zum Demodulator 73 des zweiten Modulationsteils 80 gelangen und von dort aus über Anschluß 47 als Steuersignale bzw. Synchronsignale an Anschluß 50 der Videokamera 52 weitergeleitet werden; die von der Videokamera 52 empfangenen Videosignale werden über deren Ausgang 51, Anschluß 48 dem Modulator 74 des Modulationsteils 80 zugeführt und über Anpassungsglied 72 und den Koppel-Kondensatoren 71 auf Leitung 68, 69 aufmoduliert und über Anschluß 42 auf Leitung 12 übertragen; die Videosignale werden dann über Teilstükke der Leitung 12 und die Kontaktelemente 39, 36, 32 und 22 an Anschluß 11 des ersten Koppel-Moduls 10 weitergeleitet, in dem über Koppel-Kondensatoren 62 und Anpassungsglied 63 die empfangenen Videosignale dem Demodulator 67 des Modulationsteils 79 zugeführt werden und als Bildsignale über Anschluß 9 an die Videoeinrichtung 70 gelangen, wo sie zur Bildverarbeitung zur Verfügung stehen. Die Netzfilter 60 und 75 im ersten Koppel-Modul 10 bzw. zweiten Koppel-Modul 43 sollen eventuell auftretende Hochfrequenz-Störsignale von der stationären Stromversorgung 59 und dem Bildübertragungssystem fernhalten.

Bei Netzausfall erfolgt die Stromversorgung der Strahlerlampen 53, 54, 55, 56, 57 mittels einer akkumulatorgestützten Gleichspannung, welche auch in Koppel-Modul 43 als Versorgungsspannung für die Videokamera 52 aufbereitet wird.

## Patentansprüche

1. Verfahren zur Übertragung von Videosignalen, die mittels einer Videokamera in Verbindung mit einer Operationsleuchte aufgenommen und über wenigstens eine im Inneren der Operationsleuchten-Aufhängung liegende elektrische Leitungen übermittelt werden, dadurch gekennzeichnet, daß sowohl die Videosignale als auch Steuersignale für die Video-kamera über eine Leitung geführt werden, die gleichzeitig zur Stromversorgung von Strahler-Modulen der Operationsleuchte und zur Stromversorgung der Videokamera dient.

2. Verfahren nach Anspruch 1, dadurch gekennzeichnet, daß die Videosignale über einen an die Videokamera angeschlossenen Modulator auf die Kabelleitung aufmoduliert und nach Durchlaufen der Operationsleuchten-Aufhängung demoduliert und zur bildlichen Darstellung aufbereitet werden.

3. Verfahren nach Anspruch 1 oder 2, dadurch gekennzeichnet, daß Steuersignale für die Videokamera einem der Steuer-Eingabe nachgeschalteten Modulator zugeführt und auf die Kabelleitung aufmoduliert werden und daß sie nach Durchlaufen der Operationsleuchten-Aufhängung in einem der Videokamera vorgeschalteten Demodulator demoduliert und in Steuersignale für die Videokamera umgewandelt werden.

4. Bildübertragungssystem in Verbindung mit einer Operationsleuchte umfassend ein Video-Kamera-System (52) mit einer Leitung (12) zwischen Leuchtengehäuse (14) und einer stationären Befestigung zur Übertragung von Video- und Steuersignalen, wobei die Leitung (12) innenlaufend in der von der stationären Befestigung gehaltenen Operationsleuchten-Aufhängung untergebracht ist und innenliegende drehbare Kontaktelemente zur elektrischen Verbindung zwischen Teilstücken der Leitung im Gelenkbereich von Auslegern, Armen und Bügeln der Aufhängung aufweist, dadurch gekennzeichnet, daß die Leitung (12) jeweils an ihren Enden im Operations-Leuchtengehäuse (14) und in der stationären Befestigung mit einem Koppel-Modul (10, 43) zur gleichzeitigen Übertragung von elektrischer Energie für die Leuchten-Stromversorgung und von Video- und Steuersignalen für die Videokamera (52) verbunden ist, wobei ein erster Koppel-Modul (10) mit Anschlüssen für die Stromversorgung und ein Video-Steuergerät versehen ist und ein zweiter Koppel-Modul (43) Anschlüsse für die Videokamera (52) und Strahler-Lampen (53, 54, 55, 56, 57) aufweist.

5. Bildübertragungssystem nach Anspruch 4, dadurch gekennzeichnet, daß der erste Koppel-Modul (10) in der stationären Befestigung der Aufhängungskonsole (5) mit einer Videoeinrichtung (70) zur Ausgabe von Videosignalen für die bildliche Darstellung und zur Eingabe von Steuersignalen für die Videokamera (52) sowie mit einem Anschluß (7) für ein Stromversorgungs-System (59) für die Energieeinspeisung der Leuchtenstromversorgung verbunden ist und daß ein zweiter Koppel-Modul (43) im Operations-Leuchtengehäuse (14) mit der Videokamera (52) und einem Anschluß-Klemmstein (45) für die Leuchten-Stromversorgung verbunden ist.

6. Bildübertragungssystem nach Anspruch 4 oder 5, dadurch gekennzeichnet, daß der erste Koppel-Modul (10) jeweils einen Anschluß (7) für die Stromversorgung, für die Eingabe von Kamera-Steuer-Signalen (8) und die Ausgabe von Videosignalen (9) aufweist und daß der zweite Koppel-Modul (43) jeweils einen Anschluß (49) für die Stromversorgung von Videokamera (52) und Anschluß (44, 58) für die Versorgung der Strahlerlampen (53, 54, 55, 56, 57) sowie Anschluß (47, 48) für die Abgabe von Steuersignalen und die Eingabe von Videosignalen aufweist.

7. Bildübertragungssystem nach einem der Ansprüche 4 bis 6, dadurch gekennzeichnet, daß der erste Koppel-Modul (10) einen Modulator (65) zur Aufmodulation von Kamera-Steuerungs-Signalen auf die Leitung (12) und einen Demodulator (67) zur Demodulation von übertragenen Videosignalen aufweist und daß der zweite Koppel-Modul (43) einen Demodulator (73) für die Demodulation übertragener Steuersignale und einen Modulator (74) für das von der Videokamera (52) abgegebene Videosignal aufweist.

8. Bildübertragungssystem nach einem der Ansprüche 4 bis 7, dadurch gekennzeichnet, daß jeder der Koppelmodule (10, 43) jeweils wenigstens ein Anpassungsglied (63,72) aufweist, das zwischen dem jeweils aus Modulator (65, 74) und Demodulator (67, 73) bestehenden Modulationsteil (79, 80) und der Leitung (64, 66) geschaltet ist.

9. Bildübertragungssystem nach einem der Ansprüche 4 bis 8, dadurch gekennzeichnet, daß als Leitung (12) eine symmetrische Doppeladerleitung eingesetzt ist.

10. Bildübertragungssystem nach einem der Ansprüche 4 bis 8, dadurch gekennzeichnet, daß als Leitung (12) eine Koaxialleitung eingesetzt ist.

11. Bildübertragungssystem nach Anspruch 9 oder 10, dadurch gekennzeichnet, daß zwischen den drehbaren Kontaktelementen (22, 32, 36, 39) ein Teilstück der Leitung (12) vorgesehen ist.

## Claims

1. A method for the transmission of video signals which are received by means of a video camera in connection with an operating lamp and are transmitted via at least one electric lead lying inside the operating lamp suspension, characterised in that both the video signals and also control signals for the video camera are directed via a lead which serves simultaneously for the current supply of emitter modules of the operating lamp and for the current supply of the video camera.

2. The method according to Claim 1, characterised in that the video signals are modulated upon via a modulator, connected to the video camera, to the cable lead and are demodulated after passing through the operating lamp suspension and are prepared for figurative representation.

3. The method according to Claim 1 or 2, characterised in that control signals for the video camera are supplied to a modulator connected after the control input and are modulated upon to the cable lead and that after passing through the operating lamp suspension they are demodulated in a demodulator connected in front of the video camera and converted into control signals for the video camera.

4. An image transmission system in connection with an operating lamp comprising a video camera system (52) with a lead (12) between lamp housing (14) and a stationary fastening for the transmission of video- and control signals, in which the lead (12) is accommodated running internally in the operating lamp suspension held by the stationary fastening and has intemal rotatable contact elements for the electrical connection between parts of the lead in the articulation region of beams, arms and brackets of the suspension, characterised in that the lead (12) is connected respectively at its ends in the operating lamp housing (14) and in the stationary fastening with a coupling module (10, 43) for the simultaneous transmission of electrical energy for the lamp current supply and of video- and control signals for the video camera (52), in which a first coupling module (10) is provided with connections for the current supply and a video control apparatus, and a second coupling module (43) has connections for the video camera (52) and radiator lamps (53, 54, 55, 56, 57).

5. The image transmission system according to Claim 4, characterized in that the first coupling module (10) in the stationary fastening of the suspension bracket (5) is connected with a video device (70) for the emission of video signals for graphic representation and for the input of control signals for the video camera (52) and also with a connection (7) for a current supply system (59) for the energy feed of the lamp current supply, and that a second coupling module (43) in the operating lamp housing (14) is connected with the video camera (52) and with a connection clamp piece (45) for the lamp current supply.

6. The image transmission system according to Claim 4 or 5, characterized in that the first coupling module (10) respectively has a connection (7) for the current supply, for the input of camera control signals (8) and the output of video signals (9) and that the second coupling module (43) respectively has a connection (49) for the current supply of video camera (52) and connection (44, 58) for the supply of radiator lamps (53, 54, 55, 56, 57) and also connection (47, 48) for the emission of control signals and the input of video signals.

7. The image transmission system according to any of Claims 4 to 6, characterized in that the first coupling module (10) has a modulator (65) for the modulation of camera control signals to the lead (12) and a demodulator (67) for the demodulation of transmitted video signals and that the second coupling module (43) has a demodulator (73) for the demodulation of transmitted control signals and has a modulator (74) for the video signal emitted by the video camera (52).

8. The image transmission system according to one of Claims 4 to 7, characterised in that each of the coupling modules (10, 43) respectively has at least one adjustment member (63, 72) which is connected between the modulation part (79, 80) consisting respectively of modulator (65, 74) and demodulator (67, 73), and the lead (64, 66).

9. The image transmission system according to one, of Claims 4 to 8, characterised in that a symmetrical two-wire core lead is used as lead (12).

10. The image transmission system according to any of Claims 4 to 8, characterised in that a coa3dal lead is used as lead (12).

11. The image transmission system according to Claim 9 or 10, characterised in that a part of the lead (12) is provided between the rotatable contact elements (22, 32, 36, 39).

## Revendications

1. Procédé de transmission de signaux vidéo prélevés au moyen d'une caméra vidéo en liaison avec un Scialytique et transmis par l'intermédiaire d'au moins une ligne électrique se trouvant à l'intérieur de la suspension du Scialytique, caractérisé en ce que non seulement les signaux vidéo, mais également des signaux de commande pour la caméra vidéo sont acheminés par l'intermédiaire d'une ligne servant simultanément à l'alimentation en courant de lampes de projecteur du Scialytique et à l'alimentation en courant de la caméra vidéo.

2. Procédé selon la revendication 1, caractérisé en ce que les signaux vidéo sont modulés sur la ligne du câble par l'intermédiaire d'un modulateur relié à la caméra vidéo et démodulés après traversée de la suspension du Scialytique et traités en vue d'une représentation visuelle.

3. Procédé selon la revendication 1 ou 2, caractérisé en ce que les signaux de commande pour la caméra vidéo sont appliqués à un modulateur disposé en aval de l'entrée de commande et modulés sur la ligne de câble et en ce qu'ils sont démodulés après traversée de la suspension du Scialytique dans un démodulateur disposé en amont de la caméra vidéo et convertis en signaux de commande pour la caméra vidéo.

4. Système de transmission d'images en liaison avec un Scialytique comportant un système de caméra vidéo (52) avec une ligne (12) entre le boîtier du Scialytique (14) et une fixation stationnaire en vue de la transmission de signaux vidéo et de commande, la ligne (12) s'étendant dans la suspension du Scialytique maintenue par la fixation stationnaire et comprenant des éléments de contact rotatifs intérieurs en vue de la liaison électrique entre des tronçons de la ligne à proximité d'articulations de potence, de bras et d'étriers de la suspension, caractérisé en ce que la ligne (12) est reliée à ses extrémités dans le boîtier du Scialytique (14) et dans la fixation stationnaire avec un module de couplage (10, 43) en vue de la transmission simultanée d'énergie électrique pour l'alimentation en courant des lampes et de signaux vidéo et de commande pour la caméra vidéo (52), un premier module de couplage (10) étant équipé de bornes pour l'alimentation en courant et d'un appareil de commande vidéo et un second module de couplage (43) comportant des bornes pour la caméra vidéo (52) et des lampes de projecteur (53, 54, 55, 56, 57).

5. Système de transmission d'images selon la revendication 4, caractérisé en ce que le premier module de couplage (10) est relié dans la fixation stationnaire de la console de fixation (5) à un dispositif vidéo (70) en vue de la délivrance de signaux vidéo pour la représentation d'images et en vue de l'application de signaux de commande pour la caméra vidéo (52) ainsi qu'à une borne (7) pour un système d'alimentation en courant (59) pour l'alimentation en énergie de l'alimentation en courant des lampes et en ce qu'un second module de couplage (43) dans le boîtier de Scialytique (14) est relié à la caméra vidéo (52) et à un socle en porcelaine de raccordement (45) pour l'alimentation en courant des lampes.

6. Système de transmission d'images selon la revendication 4 ou 5, caractérisé en ce que le premier module de couplage (10) présente respectivement une borne (7) pour l'alimentation en courant, pour l'application de signaux de commande de caméra (8) et pour la délivrance de signaux vidéo (9) et en ce que le second module de couplage (43) présente respectivement une borne (49) pour l'alimentation en courant de la caméra vidéo (52) et une borne (44, 58) pour l'alimentation des lampes de projecteur (53, 54, 55, 56, 57) ainsi qu'une borne (47, 48) pour la délivrance de signaux de commande et l'application de signaux vidéo.

7. Système de transmission d'images selon l'une des revendications 4 à 6, caractérisé en ce que le premier module de couplage (10) comporte un modulateur (65) en vue de la modulation de signaux de commande de la caméra sur la ligne (12) et un démodulateur (67) en vue de la démodulation de signaux vidéo transmis et en ce que le second module de couplage (43) comporte un démodulateur (73) pour la démodulation de signaux de commande transmis et un modulateur (74) pour le signal vidéo délivré par la caméra vidéo (52).

8. Système de transmission d'images selon l'une des revendications 4 à 7, caractérisé en ce que chacun des modules de couplage (10, 43) comporte respectivement au moins un élément d'adaptation (63, 72) qui est monté entre la partie de modulation (79, 80) se composant du modulateur (65, 74) et du démodulateur (67, 73) et la ligne (64, 66).

9. Système de transmission d'images selon l'une des revendications 4 à 8, caractérisé en ce qu'on utilise en tant que ligne (12) une ligne à deux brins symétrique.

10. Système de transmission d'images selon l'une des revendications 4 à 8, caractérisé en ce qu'on utilise une ligne coaxiale en tant que ligne (12).

11. Système de transmission d'images selon la revendication 9 ou 10, caractérisé en ce qu'entre les éléments de contact rotatifs (22, 32, 36, 39) est prévu un tronçon de la ligne (12).
